# EUROPÄISCHE PATENTSCHRIFT

(11) **EP 3 812 305 B1**
(45) Veröffentlichungstag und Bekanntmachung des Hinweises auf die Patenterteilung: **09.04.2025**
(21) Anmeldenummer: 19205235.5
(22) Anmeldetag: 25.10.2019
(51) Int. Cl.: B65G 1/04, B65G 57/30

(54) **STAPELLAGERANORDNUNG UND VERFAHREN ZUM BETREIBEN EINER STAPELLAGERANORDNUNG**
STACK STORAGE ASSEMBLY AND METHOD OF OPERATING A STACK STORAGE ASSEMBLY
AGENCEMENT DE STOCKAGE PAR EMPILEMENT ET PROCÉDÉ DE FONCTIONNEMENT D'UN AGENCEMENT DE STOCKAGE PAR EMPILEMENT

(43) Veröffentlichungstag der Anmeldung: 28.04.2021
(73) Patentinhaber: Jungheinrich Aktiengesellschaft, 22047 Hamburg (DE)
(72) Erfinder: Cavelius, Jörg, 61118 Bad Vilbel (DE); Becker, Michael, 63512 Hainburg (DE); Liebhaber, Markus, 61440 Oberursel (DE)
(74) Vertreter: Keil & Schaafhausen Patentanwälte PartGmbB

(56) Entgegenhaltungen:
- EP-A1- 0 458 021
- CN-A- 110 065 751
- DE-A1- 102012 020 899
- DE-A1- 102013 009 340
- DE-A1- 19 540 855
- JP-A- S6 071 402
- JP-B1- 6 592 711
- US-B2- 10 112 774

## Beschreibung

Die vorliegende Erfindung betrifft eine Stapellageranordnung mit mehreren Behälteraufnahmeräumen, die in mehreren Reihen und Spalten angeordnet sind, wobei unter den Behälteraufnahmeräumen ein Beschickungsraum angeordnet ist, in dem Beschickungsfahrzeuge verfahrbar sind.

Ferner betrifft die Erfindung ein Verfahren zum Betreiben einer Stapellageranordnung, die mehrere Behälteraufnahmeräume aufweist, die in Reihen und Spalten angeordnet sind, wobei man Behälter mithilfe von Beschickungsfahrzeugen von unten in die Behälteraufnahmeräume einbringt und Behälter mithilfe von Beschickungsfahrzeugen unten aus den Behälteraufnahmeräumen entnimmt.

Eine derartige Stapellageranordnung ist beispielsweise aus JP 6 592 711 B1, welche die Merkmale des Oberbegriffs des Anspruchs 1 offenbart, bekannt. Die Behälter können mit Hilfe der Beschickungsfahrzeuge zu Positionen gefahren werden, in denen Greifer vorgesehen sind, die Gegenstände aus den Behältern entnehmen können.

Eine Stapellageranordnung ermöglicht das Aufbewahren einer Vielzahl von Behältern auf relativ engem Raum. Die Behälter werden jeweils in Stapeln angeordnet. Zur Aufnahme eines Stapels derartiger Behälter ist jeweils ein Behälteraufnahmeraum vorgesehen. Die Behälteraufnahmeräume sind in Reihen oder "Gassen" hintereinander angeordnet. Mehrere derartige Reihen oder Gassen sind nebeneinander angeordnet, sodass sich eine matrixartige Anordnung der Behälteraufnahmeräume ergibt.

Wenn man die Behälteraufnahmeräume von unten beschickt und die Behälter auch nach unten wieder aus den Behälteraufnahmeräumen entnimmt, dann kann man ein dazu verwendetes Beschickungsfahrzeug auf dem Fußboden oder einer anderen Fahrfläche bewegen, die unterhalb der Behälteraufnahmeräume angeordnet sind. Dies hat den Vorteil, dass die Stapellageranordnung nicht noch zusätzlich das Gewicht von einem oder mehreren Beschickungsfahrzeugen aufnehmen muss. Der konstruktive Aufwand für eine derartige Stapellageranordnung kann also klein gehalten werden.

Der Erfindung liegt die Aufgabe zugrunde, den Betrieb einer Stapellageranordnung wirtschaftlich zu gestalten.

Diese Aufgabe wird durch die Merkmale des Anspruchs 1 gelöst.

Die Stapellageranordnung wird damit prinzipiell in eine Reihe von Teil-Stapellageranordnungen unterteilt, wobei jede Teil-Stapellageranordnung eine einzelne Reihe von Behälteraufnahmeräumen aufweist. Diese Behälteraufnahmeräume werden dann von einer eigenen Beschickungsfahrzeug-Halteposition aus versorgt, was den Aufwand für die Steuerung der Beschickungsfahrzeuge klein hält. Die Beschickungsfahrzeuge müssen sich nur in der jeweils zugeordneten Reihe bewegen können und Behälter von der Beschickungsfahrzeug-Halteposition in die Behälteraufnahmeräume einbringen oder aus den Behälteraufnahmeräume entnehmen und in die Beschickungsfahrzeug-Halteposition transportieren. **In** der Beschickungsfahrzeug-Halteposition können die Behälter dann mit einzulagerndem Gut befüllt werden oder das eingelagerte Gut kann dort aus dem jeweiligen Behälter entnommen werden. Der Begrif "Halteposition" ist hier aus Gründen der Einfachheit gewählt. Es ist nicht unbedingt notwendig, dass das Beschickungsfahrzeug in der Halteposition tatsächlich anhält. Die Halteposition kann auch durch einen Bereich gebildet werden, in dem die Behälter während einer Bewegung des Beschickungsfahrzeugs, kurz "on the fly", befüllt oder (teilweise) entleert werden können.

Jeder Beschickungsfahrzeug-Halteposition ist eine Einlager/Auslager-Anordnung zugeordnet, wobei jede Einlager/Auslager-Anordnung mindestens eine Behälterübergabeposition zur Übergabe eines Behälters von der Einlager/Auslager-Anordnung an das Beschickungsfahrzeug oder umgekehrt aufweist.

Damit wird eine erhöhte Sicherheit für einen Benutzer oder Bediener geschaffen. Bevor der Benutzer in den Behälter eingreifen kann, um ein Produkt oder allgemein einzulagerndes Gut zu entnehmen oder das Produkt in den Behälter einzusetzen, wird der Behälter vom Beschickungsfahrzeug entnommen. Erst dann, wenn kein Eingriff eines Bedieners mehr erforderlich ist, wird der Behälter vom Beschickungsfahrzeug abgeholt oder er wird vom Beschickungsfahrzeug in die Einlager/Auslager-Anordnung eingefahren.

Auch ist bevorzugt, dass die Behälterübergabeposition eine Ablage aufweist, unter der eine Einfahrfläche für das Beschickungsfahrzeug angeordnet ist. Das Beschickungsfahrzeug kann in die Einfahrfläche einfahren und den Behälter dann auf der Ablage ablegen. Hierzu kann das Beschickungsfahrzeug beispielsweise eine höhenveränderbare Behälteraufnahme aufweisen. Wenn die Behälteraufnahme abgesenkt wird, dann kann der Behälter an die Ablage übergeben werden.

Vorzugsweise ist mehreren Einlager/AuslagerAnordnungen ein gemeinsames Transferelement zugeordnet. Das Transferelement kann beispielsweise als Förderband ausgebildet sein. Falls erforderlich, kann dann ein Behälter von einer Position vor einer Reihe der Stapellageranordnung in eine Position vor einer anderen Reihe der Stapellageranordnung verbracht werden, sodass der Behälter wahlweise in verschiedenen Reihen der Stapellageranordnung verbracht werden kann. Die Steuerung wird dabei nur unwesentlich komplizierter, weil die eigentliche Einlager- und Auslagervorgehensweise nach wie vor für jede Reihe getrennt gehandhabt werden kann und nur im Bedarfsfall eine Bewegung senkrecht zu den Reihen erforderlich ist.

Vorzugsweise weist mindestens eine Einlager/Auslager-Anordnung eine Einlagerposition und eine Auslagerposition auf. In der Einlagerposition kann ein Behälter bereitgestellt werden, der in die Stapellageranordnung eingebracht werden soll. In der Auslagerposition kann ein Behälter angeordnet werden, der aus der Stapellageranordnung entnommen worden ist. Man kann dann die Tätigkeiten, die zur Vorbereitung der Einlagerung notwendig sind, und die Tätigkeiten, die nach dem Auslagern erforderlich sind, voneinander entkoppeln.

Vorzugsweise sind die Einlagerposition und die Auslagerposition in Verlängerung der Reihe hintereinander angeordnet. Die Einlagerposition und die Auslagerposition können dann durch eine Bewegung des Beschickungsfahrzeugs bedient werden, die der Richtung der Reihe folgt.

In einer Ausgestaltung ist vorgesehen, dass eine Steuereinrichtung vorgesehen ist, die eine Position eines Behälters in den Behälteraufnahmeräumen in Abhängigkeit von einer Umschlagshäufigkeit des Behälters festlegt. Ein Behälter dient, wie oben bereits erwähnt, zur Aufnahme von Produkten. Hierbei gibt es Produkte, die häufiger benötigt werden als andere Produkte. Ein Behälter, der die häufig benötigten Produkte enthält, hat eine höhere Umschlagshäufigkeit als ein Behälter, der weniger oft benötigte Produkte enthält. Vielfach ist es bekannt, welche Produkte häufig benötigt werden. In einer vorteilhaften Ausgestaltung kann jedoch vorgesehen sein, dass die Steuereinrichtung die Umschlagshäufigkeit eines Behälters im Betrieb ermittelt. Dies kann es erforderlich machen, im Laufe der Zeit die Behälter umzustapeln, also ihre Position zu ändern. Eine derartige Änderung der Positionen kann ohne größeren Aufwand im Betrieb erfolgen.

Vorzugsweise legt die Steuereinrichtung die Position eines Behälters mit einer hohen Umschlagshäufigkeit in einem unteren Bereich eines Behälteraufnahmeraums fest. Da die Beschickung und die Entnahme eines Behälteraufnahmeraums von unten erfolgt, sind dann weniger Schritte erforderlich, um zu dem Behälter mit der höheren Umschlagshäufigkeit zu gelangen. Dies spart Zeit und erhöht damit die Wirtschaftlichkeit beim Betrieb der Stapellageranordnung.

Auch kann vorgesehen sein, dass die Steuereinrichtung die Position eines Behälters mit einer hohen Umschlagshäufigkeit in einer Spalte festlegt, die näher an der Beschickungsfahrzeug-Halteposition liegt, als die Position eines Behälters mit niedriger Umschlagshäufigkeit. Dementsprechend muss das Beschickungsfahrzeug einen kürzeren Weg zurücklegen, wenn es einen Behälter mit einer hohen Umschlagshäufigkeit erreichen soll.

Vorzugsweise steuert die Steuereinrichtung das Transferelement in Abhängigkeit von der Umschlagshäufigkeit des Behälters an und ordnet dem Behälter eine von der Umschlagshäufigkeit abhängige Reihe zu. Damit kann man erreichen, dass alle Behälter mit einer hohen Umschlagshäufigkeit in einem unteren Bereich der Behälteraufnahmeräume und in einer Spalte nahe der Beschickungsfahrzeug-Halteposition angeordnet werden können.

Die Aufgabe wird zudem durch ein Verfahren nach Anspruch 10 gelöst.

Damit ergeben sich die oben genannten Vorteile. Jeder Reihe ist ein derartiger Bereich zugeordnet, z.B. die Beschickungsfahrzeug-Halteposition, der von einem Beschickungsfahrzeug erreicht werden kann, das linear in einer Richtung bewegbar ist, die durch die Reihe definiert ist. Man kann dadurch das Beschicken von einzelnen Reihen voneinander entkoppeln, sodass die entsprechende Steuerung sehr einfach gehalten werden kann.

Vorzugsweise bewegt man Behälter außerhalb der Reihen von einem Bereich in einen anderen Bereich. Damit ist auch ein Wechsel von Reihen möglich, falls dies erforderlich werden sollte.

Auch ist von Vorteil, wenn man Behälter mit einer hohen Umschlagshäufigkeit in einem unteren Bereich der Behälteraufnahmeräume anordnet. Man benötigt dann nur wenige Umstapelvorgänge, wenn man einen Behälter erreichen will.

Auch ist von Vorteil, wenn man Behälter mit einer hohen Umschlagshäufigkeit näher an dem Bereich in Verlängerung der Reihen anordnet als Behälter mit einer niedrigen Umschlagshäufigkeit. Die Behälter mit der höheren Umschlagshäufigkeit werden also "vorne" angeordnet, während die Behälter mit einer niedrigen Umschlagshäufigkeit "hinten" angeordnet werden. Dementsprechend werden die Fahrzeiten der Beschickungsfahrzeuge kurz gehalten.

Vorzugsweise ermittelt man die Umschlagshäufigkeit von Behältern dynamisch im Betrieb. Damit ist eine Kenntnis der Umschlagshäufigkeit von vornherein nicht erforderlich. Das System ist vielmehr selbstlernend.

Die Erfindung wird im Folgenden anhand von bevorzugten Ausführungsbeispielen in Verbindung mit einer Zeichnung beschrieben. Hierin zeigen:
- Fig. 1: eine schematische Darstellung einer Stapellageranordnung in Draufsicht,
- Fig. 2: eine schematische Ansicht der Stapellageranordnung von Fig. 1 von der Seite,
- Fig. 3: eine schematische Ansicht einer Ausführungsform einer erfindungsgemäßen Stapellageranordnung in Draufsicht,
- Fig. 4: eine schematische Ansicht der Stapellageranordnung von Fig. 3 von der Seite,
- Fig. 5: eine schematische Ansicht einer zweiten Ausführungsform einer erfindungsgemäßen Stapellageranordnung in Draufsicht, und
- Fig. 6: eine schematische Darstellung der Stapellageranordnung von Fig. 5 von der Seite.

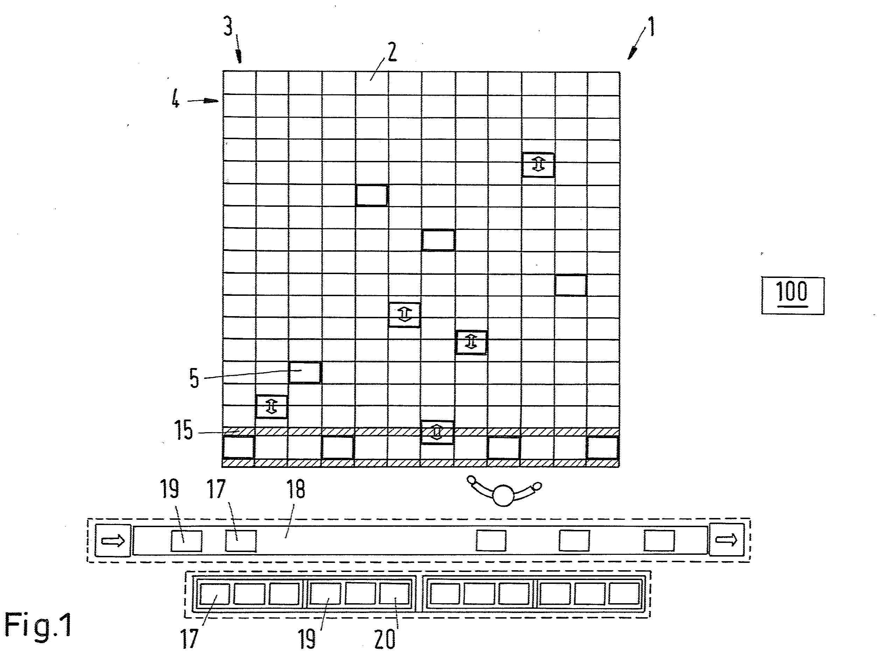

Fig. 1 zeigt schematisch eine Stapellageranordnung 1 mit mehreren Behälteraufnahmeräumen 2, die in mehreren Reihen 3 und mehreren Spalten 4 angeordnet sind. Die Behälteraufnahmeräume 2 sind also in Draufsicht nach Art einer Matrix mit Reihen 3 und Spalten 4 angeordnet, wobei sich jeder Behälteraufnahmeraum 2 am Schnittpunkt einer Reihe 3 mit einer Spalte 4 befindet.

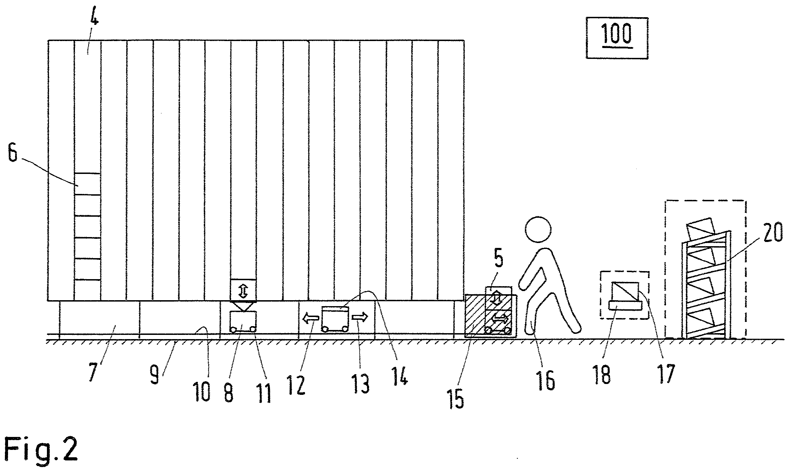

In jedem Behälteraufnahmeraum 2 können mehrere Behälter 5 übereinander angeordnet werden und zwar in Form eines Stapels 6, wie dies in Fig. 2 dargestellt ist.

Unterhalb der Behälteraufnahmeräume 2 ist ein Beschickungsraum 7 angeordnet, in dem ein oder mehrere Beschickungsfahrzeuge 8 verfahrbar sind. Die Beschickungsfahrzeuge 8 können dabei auf einem Fußboden 9 verfahren werden oder, wie dargestellt, auf einer Fahrbahn 10, die auf dem Fußboden 9 oder mit einem Abstand zum Fußboden 9 angeordnet ist. Die Fahrbahn 10 kann als durchgehende Fläche ausgebildet sein. Sie kann aber auch als Schienenanordnung ausgebildet sein, auf der Räder 11 des Beschickungsfahrzeugs 8 abrollen können.

Das Beschickungsfahrzeug 8 ist in entgegengesetzten Richtungen bewegbar, wie dies durch Pfeile 12, 13 dargestellt ist. Allerdings kann das Beschickungsfahrzeug 8 nur in Richtung einer Reihe 3 bewegt werden. Das Beschickungsfahrzeug 8 ist also ausschließlich unter Behälteraufnahmeräumen 2 einer Reihe 3 verfahrbar.

Das Beschickungsfahrzeug 8 kann innerhalb der Reihe 3 einen Behälter 5 von einer Spalte 4 zu einer anderen Spalte 4 transportieren, um einen Behälter 5 umzulagern.

Eine Hauptaufgabe des Beschickungsfahrzeug 8 besteht aber darin, einen Behälter 5 in die Stapellageranordnung einzubringen oder einen Behälter 5 aus der Stapellageranordnung zu entnehmen.

Beim Einbringen transportiert das Beschickungsfahrzeug 8 den Behälter 5 in einer Position unterhalb eines Behälteraufnahmeraums 2 und hebt den Behälter 5 an. Sobald der Behälter 5 zur Anlage an den Stapel 6 kommt, wird der Stapel 6 mit angehoben und der Behälter 5 mit dem Stapel 6 wird weiter angehoben, bis er eine Halteeinrichtung passiert hat, mit der der untere Behälter 5 im notwendigen Abstand über der Fahrbahn 10 gehalten wird.

Zum Entnehmen eines Behälters 5 aus der Stapellageranordnung wird das Beschickungsfahrzeug 8 wiederum unter den Behälteraufnahmeraum 2 gefahren und eine Behälteraufnahme 14 des Beschickungsfahrzeugs 8 wird angehoben, bis sie in Kontakt mit dem unteren Behälter 5 eines Stapels 6 kommt. Der Behälter 5 mit dem Stapel 6 wird angehoben. Die Halteeinrichtung kann dann gelöst werden. Der Behälter 5 mit dem Stapel 6 wird abgesenkt. Dabei kommt die Halteeinrichtung (nicht dargestellt) in Eingriff mit dem bis dahin zweiten Behälter eines Stapels 6 von unten, sodass der verbleibende Stapel im Behälteraufnahmeraum 2 gehalten wird. Der zu entnehmende Behälter 5 kann dann mit dem Beschickungsfahrzeug 8 aus der Stapellageranordnung herausgefahren werden.

Das Beschickungsfahrzeug 8 wird dann in eine Beschickungsfahrzeug-Halteposition 15 gefahren, die außerhalb der Behälteraufnahmeräume 2 angeordnet ist.

Hierbei ist jeder Reihe 3 eine eigene Beschickungsfahrzeug-Halteposition zugeordnet.

Eine Steuereinrichtung 100, die mit dem Beschickungsfahrzeug 8 leitungslos oder auch über Leitungen verbunden sein kann, steuert das Beschickungsfahrzeug 8 so, dass es die notwendigen Aufgaben, also das Einlagern, Auslagern oder Umlagern von Behältern 5 in der jeweiligen Reihe 3 erfüllen kann. Da sich die Bewegung des Beschickungsfahrzeugs 8 auf eine einzelne Reihe 3 beschränkt, kann die Steuereinrichtung 100 mit relativ einfachen Algorithmen arbeiten.

Eine Bedienungsperson 16 hat auf den Behälter 5 Zugriff, wenn sich das Beschickungsfahrzeug 8 in der Beschickungsfahrzeug-Halteposition 15 befindet. Die Bedienungsperson 16 kann dann ein Produkt aus dem Behälter 5 entnehmen und es in einem Auftragsbehälter 17 ablegen. Der Auftragsbehälter 17 dient beispielsweise dazu, mehrere unterschiedliche Produkte, die zu einer Bestellung gehören, zusammenzufassen, um sie später gemeinsam versenden zu können. Der Auftragsbehälter 17 ist auf einem Transferelement 18 angeordnet, das vorzugsweise parallel zu den Spalten 4 der Stapellageranordnung 1 angeordnet ist.

Es ist auch möglich, auf dem Transferelement 18 Quellbehälter 19 anzuordnen, aus denen Produkte entnommen werden können, die in den Behälter 5 übertragen werden sollen und später in der Stapellageranordnung 1 eingelagert werden sollen.

Ein weiteres nicht dargestelltes Transferelement kann verwendet werden, um einen Behälter 5 von einer Reihe 3 zu einer anderen Reihe 3 zu transportieren.

Auftragsbehälter 17 und Quellbehälter 19 können auch in einem oder mehreren Regalen 20 angeordnet sein, die zusätzlich oder anstelle des Transferelements 18 vorgesehen sein können.

Wie oben erwähnt, weist das Beschickungsfahrzeug 8 eine Behälteraufnahme 14 auf, die angehoben oder abgesenkt werden kann. Somit ist es möglich, in der Beschickungsfahrzeug-Halteposition 15 den Behälter 5 so anzuheben, dass die Bedienungsperson 16 dort einen ergonomischen Zugriff auf das im Behälter 5 befindliche Produkt hat.

Bei der Ausgestaltung nach den Figuren 1 und 2 ist das Beschickungsfahrzeug 8, das den Behälter 5 aus dem Behälteraufnahmeraum in die Beschickungsfahrzeug-Halteposition 15 transportiert hat, solange blockiert, wie die Bedienungsperson 16 Zugriff auf den Behälter 5 benötigt.

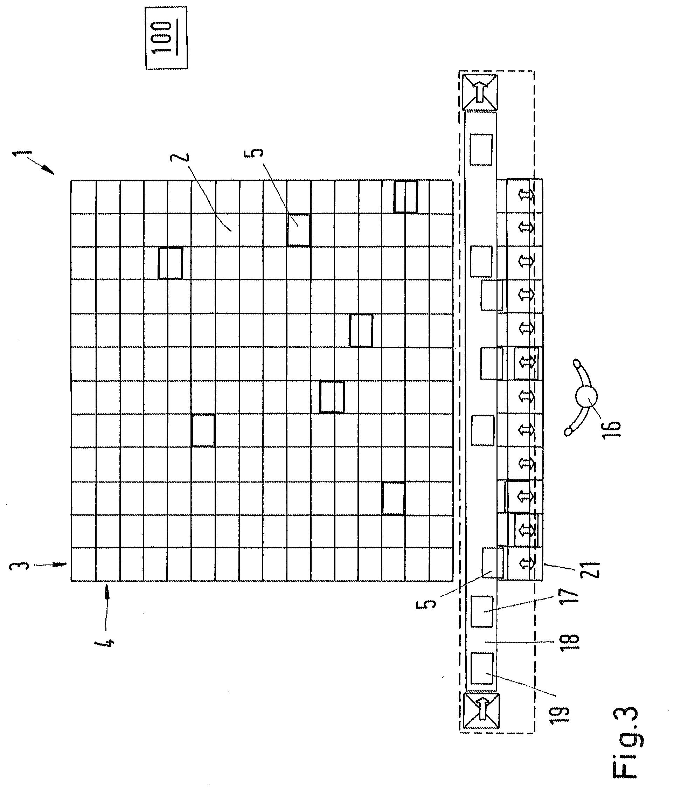

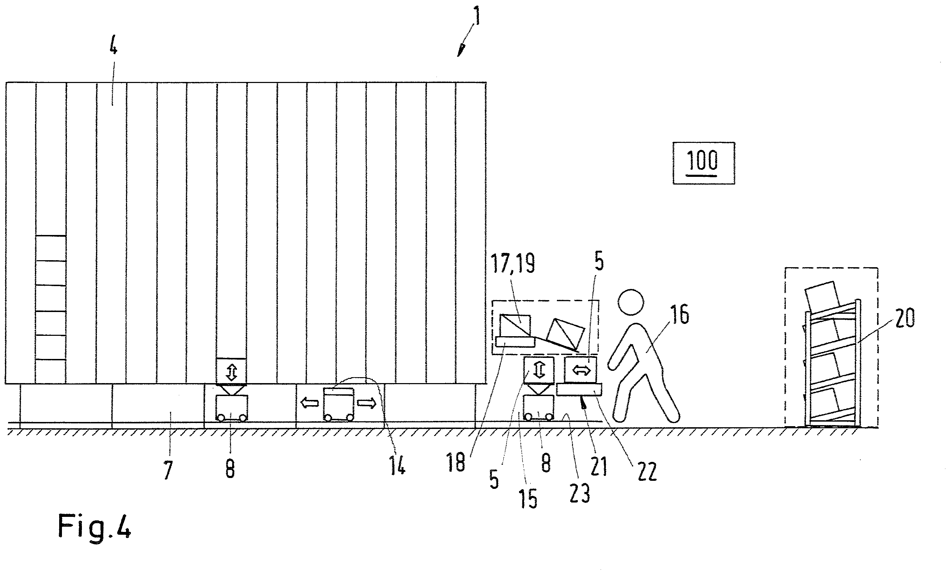

Erfindungsgemäß ist daher, wie in den Figuren 3 und 4 dargestellt, jeder Beschickungsfahrzeug-Halteposition 15 eine Einlager/Auslager-Anordnung 21 zugeordnet, in der ein Behälter 5 vom Beschickungsfahrzeug 8 auf einen Einlager/Auslager-Stich 22 überführt werden kann und umgekehrt. Hierzu wird der Behälter 5 vom Beschickungsfahrzeug 8 angehoben, bis er sich in einer Höhe oberhalb des Einlager/Auslager-Stich 22 befindet. Das Beschickungsfahrzeug 8 kann unter den Einlager/Auslager-Stich 22 verfahren werden. Wenn die Behälteraufnahme 14 des Beschickungsfahrzeugs 8 abgesenkt wird, wird der Behälter 5 auf dem Einlager/Auslager-Stich 22 abgesetzt. Die Bedienungsperson 16 hat dann Zugriff auf den Behälter 5, ohne dass das Beschickungsfahrzeug 8 während der Zeit des Zugriffs in der Beschickungsfahrzeug-Halteposition 15 verbleiben muss. Das Beschickungsfahrzeug 8 kann dann verwendet werden, um Behälter 5 zwischen Spalten 4 der Stapellageranordnung umzustapeln.

Der Einlager/Auslager-Stich 22 bildet eine Ablage, unter der eine Einfahrfläche 23 für das Beschickungsfahrzeug 8 angeordnet ist.

Auch bei der Ausgestaltung nach Figur 3 und 4 ist ein Transferelement 18 vorgesehen, auf dem Auftragsbehälter und Quellbehälter 19 von einer Einlager/Auslager-Position zu einer anderen gefahren werden können. Auf dem Transferelement 18 können auch Behälter 5 zwischen einzelnen Reihen 3 hin und her transportiert werden, falls dies erforderlich ist.

Der Transport eines Behälters 5 vom Einlager/Auslager-Stich 22 auf das Transferelement 18 muss dann von der Bedienungsperson 16 vorgenommen werden, die im Bedarfsfall von der Steuereinrichtung 100 entsprechende Informationen oder Signale erhält. In nicht näher dargestellter Weise können auch Hilfsmittel vorgesehen sein, mit denen ein Behälter 5 vom Einlager/Auslager-Stich 22 auf das Transferelement 18 überführt werden können.

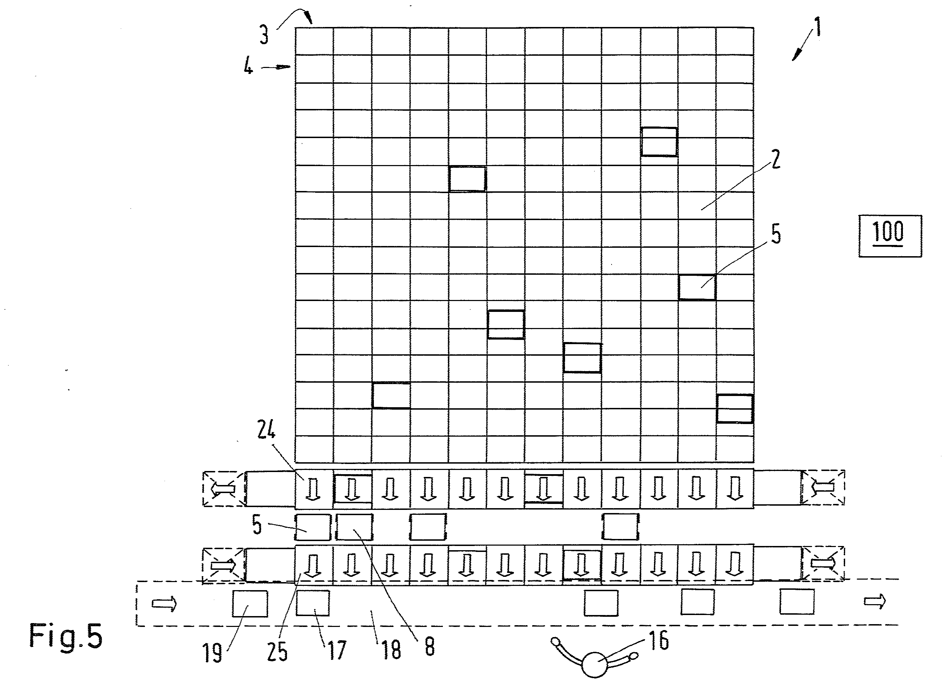

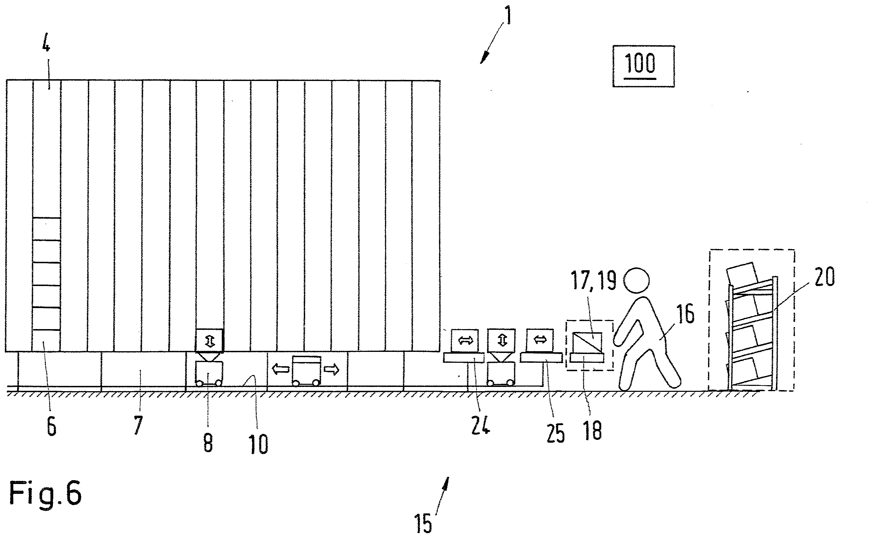

Fig. 5 und 6 zeigen eine Weiterbildung der Ausgestaltung nach Fig. 3 und 4.

Bei der Ausgestaltung nach Fig. 5 und 6 ist die Einlager/Auslager-Anordnung in eine Einlager-Anordnung 24 und eine Auslager-Anordnung 25 unterteilt. Auch hier ist wiederum jeder Reihe 3 eine eigene Einlager-Anordnung 24 und eine eigene Auslager-Anordnung 25 zugeordnet. Die Einlager-Anordnung 24 und die Auslager-Anordnung 25 sind in Verlängerung der Reihe 3 hintereinander angeordnet. Sie können, wie dies in Fig. 5 dargestellt ist, mit einem Abstand zueinander angeordnet sein, oder wie nicht in der Zeichnung dargestellt, dicht beieinander angeordnet sein. Es ist auch möglich, die beiden Anordnungen 24, 25 an entgegengesetzten Enden der Reihen 3 anzuordnen.

Die Steuereinrichtung 100 steuert den Betrieb der Beschickungsfahrzeuge 8 in jeder Reihe 3. Hierbei legt die Steuereinrichtung 100 eine Position eines Behälters 5 in den Behälteraufnahmeräumen 2 in Abhängigkeit von einer Umschlagshäufigkeit des jeweiligen Behälters 5 fest.

Dies soll am Beispiel einer Stapellageranordnung 1 erläutert werden, in der eine Vielzahl von Produkten vorrätig gehalten wird, die beispielsweise von einem Versandhandel zur Versendung gebracht werden sollen.

Es gibt hierbei Produkte, die häufiger nachgefragt werden als andere Produkte. Dementsprechend muss ein Behälter 5, der ein häufiger nachgefragtes Produkt enthält, öfters aus der Stapellageranordnung 1 entnommen werden, als ein Behälter 5, in dem weniger häufig nachgefragte Produkte gelagert sind.

Die Steuereinrichtung 100 steuert nun die Position des jeweiligen Behälters 5 so, dass der Behälter 5 mit einer hohen Umschlagshäufigkeit in einem unteren Bereich eines Behälteraufnahmeraums 2 angeordnet ist. Wenn also ein derartiger Behälter 5 aus der Stapellageranordnung entnommen werden muss, dann sind nur wenige Umstapelvorgänge erforderlich.

Dies ist ohne Weiteres ersichtlich, wenn der Behälter mit dem nachgefragten Produkt in der untersten Position eines Stapels 6 angeordnet ist. In diesem Fall muss das Beschickungsfahrzeug 8 lediglich den untersten Behälter 5 abholen und zur Auslager-Position 25 verbringen.

Wenn der entsprechende Behälter beispielsweise in der Position Nummer 3 von unten angeordnet ist, dann muss das Beschickungsfahrzeug 8 zunächst den untersten Behälter aus dem Stapel 6 entfernen und diesen Behälter in einem anderen Behälteraufnahmeraum 2 unterbringen. Danach muss das Beschickungsfahrzeug 8 mit dem nächsten Behälter auf gleiche Weise verfahren. Dieser Behälter kann jedoch auch in einem anderen Behälteraufnahmeraum 2 der entsprechenden Reihe 3 untergebracht werden. Danach ist der nachgefragte Behälter 5 zugänglich und kann vom Beschickungsfahrzeug 8 in die Auslager-Position 25 verbracht werden. Wenn genügend Beschickungsfahrzeuge 8 in einer Reihe 3 verfügbar sind, kann man diese Beschickungsfahrzeuge auch zum vorübergehenden unterbringen der Behälter verwenden.

Die Steuereinrichtung 100 kann die Position eines Behälters mit einer hohen Umschlagshäufigkeit auch in einer Spalte 4 festlegen, die näher an der Beschickungsfahrzeug-Halteposition 15 liegt, als die Position eines Behälters 5 mit niedriger Umschlagshäufigkeit. In einem derartigen Fall muss das Beschickungsfahrzeug nicht so lange Strecken zurücklegen, um den entsprechenden Behälter 5 aus der Stapellageranordnung 1 zu entnehmen. Zweckmäßiger Weise wird man einen häufig nachgefragten Behälter 5 sowohl in einem unteren Bereich eines Behälteraufnahmeraums 2 positionieren, der auch Nahe an der Beschickungsfahrzeug-Halteposition 15 angeordnet ist.

In vielen Fällen ist die Umschlagshäufigkeit eines Behälters 5 bekannt, beispielsweise weil bekannt ist, welche Produkte häufig nachgefragt werden.

Die Stapellageranordnung kann jedoch auch selbstlernend ausgebildet sein. In diesem Fall ermittelt die Steuereinrichtung 100 die Umschlagshäufigkeit der Behälter 5 dynamisch im Betrieb. Dies bedeutet zwar, dass bei einer Inbetriebnahme der Stapellageranordnung nur eine zufällige Verteilung der Behälter 5 in den Reihen 3, Spalten 4 und Stapeln 6 vorliegt. Die zufällige Verteilung wird sich aber im Laufe der Zeit ändern, wenn die Steuereinrichtung 100 gelernt hat, welche Behälter 5 öfter benötigt werden.

## Patentansprüche

1. Stapellageranordnung (1) mit Beschickungsfahrzeugen (8) und mehreren Behälteraufnahmeräumen (2), die in mehreren Reihen (3) und Spalten (4) angeordnet sind und in denen Behälter (5) in Form von Stapeln (6) übereinander angeordnet werden können, wobei die Behälter (5) mit Hilfe der Beschickungsfahrzeuge (8) von unten in die Behälteraufnahmeräume (2) eingebracht und die Behälter (5) mit Hilfe der Beschickungsfahrzeuge (8) unten aus den Behälteraufnahmeräumen (2) entnommen werden können, wobei unter den Behälteraufnahmeräumen (2) ein Beschickungsraum (7) angeordnet ist, in dem die Beschickungsfahrzeuge (8) verfahrbar sind und die Stapellageranordnung (1) mehrere Beschickungsfahrzeug-Haltepositionen (15) und mehrere Einlager/Auslager-Anordnungen (21) aufweist, wobei die Beschickungsfahrzeug-Haltepositionen (15) außerhalb der Behälteraufnahmeräume (2) angeordnet sind, wobei jede Einlager/Auslager-Anordnung (21) mindestens eine Behälterübergabeposition zur Übergabe eines Behälters (5) von der Einlager/Auslager-Anordnung (21) zum Beschickungsfahrzeug (8) oder umgekehrt aufweist, **dadurch gekennzeichnet, dass** jeder Reihe (3) eine eigene Beschickungsfahrzeug-Halteposition (15) zugeordnet ist und jeder Beschickungsfahrzeug-Halteposition (15) eine Einlager/Auslager-Anordnung (21) zugeordnet ist.

2. Stapellageranordnung nach Anspruch 1, **dadurch gekennzeichnet, dass** die Behälterübergabeposition eine Ablage (22) aufweist, unter der eine Einfahrfläche (23) für das Beschickungsfahrzeug (8) angeordnet ist.

3. Stapellageranordnung nach Anspruch 1 oder 2, **dadurch gekennzeichnet,**
**dass** mehreren Einlager/Auslager-Anordnungen (21) ein gemeinsames Transferelement (18) zugeordnet

4. Stapellageranordnung nach einem der Ansprüche 1 bis 3, **dadurch gekennzeichnet, dass** mindestens eine Einlager/Auslager-Anordnung (21) eine Einlagerposition (24) und eine Auslagerposition (25) aufweist.

5. Stapellageranordnung nach Anspruch 4, **dadurch gekennzeichnet, dass** die Einlagerposition (24) und die Auslagerposition (25) in Verlängerung der Reihe (3) hintereinander angeordnet sind.

6. Stapellageranordnung nach einem der Ansprüche 1 bis 5, **dadurch gekennzeichnet, dass** eine Steuereinrichtung (100) vorgesehen ist, die eine Position eines Behälters (5) in den Behälteraufnahmeräumen (2) in Abhängigkeit von einer Umschlagshäufigkeit des Behälters (5) festlegt.

7. Stapellageranordnung nach Anspruch 6, **dadurch gekennzeichnet, dass** die Steuereinrichtung (100) die Position eines Behälters (5) mit einer hohen Umschlagshäufigkeit in einem unteren Bereich eines Behälteraufnahmeraumes (2) festlegt.

8. Stapellageranordnung nach Anspruch 6 oder 7, **dadurch gekennzeichnet, dass** die Steuereinrichtung (100) die Position eines Behälters (5) mit einer hohen Umschlagshäufigkeit in einer Spalte (4) festlegt, die näher an der Halteposition (15) liegt als die Position eines Behälters (5) mit niedriger Umschlagshäufigkeit.

9. Stapellageranordnung nach einem der Ansprüche 6 bis 8, **dadurch gekennzeichnet, dass** die Steuereinrichtung (100) das Transferelement (18) in Abhängigkeit von der Umschlaghäufigkeit des Behälters (5) ansteuert und dem Behälter (5) eine von der Umschlaghäufigkeit abhängige Reihe (3) zuordnet.

10. Verfahren zum Betreiben einer Stapellageranordnung (1) nach einem der Ansprüche 1-9, wobei man Behälter (5) mit Hilfe der Beschickungsfahrzeuge (8) von unten in die Behälteraufnahmeräume (2) einbringt und Behälter (5) mit Hilfe der Beschickungsfahrzeuge (8) unten aus den Behälteraufnahmeräumen (2) entnimmt, wobei man jeder Reihe (3) von Behälteraufnahmeräumen (2) eine Beschickungsfahrzeug-Halteposition (15) in Verlängerung der Reihe (3) zuordnet, in der man einen Behälter (5) zur Einlagerung oder nach dem Auslagern bereitstellen kann.

11. Verfahren nach Anspruch 10, **dadurch gekennzeichnet, dass** man Behälter (5) außerhalb der Reihen (3) von einem Bereich in einen anderen Bereich bewegt.

12. Verfahren nach Anspruch 10 oder 11, **dadurch gekennzeichnet, dass** man Behälter (5) mit einer hohen Umschlaghäufigkeit in einem unteren Bereich der Behälteraufnahmeräume (2) anordnet.

13. Verfahren nach einem der Ansprüche 10 bis 12, **dadurch gekennzeichnet, dass** man Behälter (5) mit einer hohen Umschlaghäufigkeit näher an dem Bereich (15) in Verlängerung der Reihen (3) anordnet als Behälter mit einer niedrigen Umschlaghäufigkeit.

14. Verfahren nach einem der Ansprüche 10 bis 13, **dadurch gekennzeichnet, dass** man die Umschlaghäufigkeit von Behältern dynamisch im Betrieb ermittelt.

## Claims

1. Stacking storage arrangement (1) comprising loading vehicles (8) and a plurality of container receiving spaces (2) which are arranged in a plurality of rows (3) and columns (4), and in which containers (5) can be arranged in the form of stacks (6) on top of one another, wherein the containers (5) are introduced from below into the container receiving spaces (2) by means of the loading vehicles (8) and the containers (5) can be removed from below from the container receiving spaces (2) by means of the loading vehicles (8), wherein a loading area (7) is arranged under the container receiving areas (2), in which loading area (7) the loading vehicles (8) can be driven and the stacking storage arrangement (1) has several loading vehicle stopping positions (15) and several storage/retrieval arrangements (21), wherein the loading vehicle stopping positions (15) are located out of the container receiving spaces (2), wherein each storage/retrieval arrangements (21) has at least one container transfer position to transfer a container (5) from the storage/retrieval arrangement (21) to the loading vehicle (8) or vice versa, **characterized in that** each row (3) is assigned its own loading-vehicle stopping position (15), wherein each loading vehicle stopping position (15) is assigned a storage/retrieval arrangement (21).

2. Stacking storage arrangement according to claim 1, **characterized in that** the container transfer position has a tray (22) under which a drive-in surface (23) for the loading vehicle (8) is arranged.

3. Stacking storage arrangement according to claim 1 or 2, **characterized in that** a common transfer element (18) is assigned to a plurality of storage/retrieval arrangements (21).

4. Stacking storage arrangement according to one of claims 1 to 3, **characterized in that** at least one storage/retrieval arrangement (21) has a storage position (24) and a retrieval position (25).

5. Stacking storage arrangement according to claim 4, **characterized in that** the storage position (24) and the retrieval position (25) are arranged one behind the other in an extension of the row (3).

6. Stacking storage arrangement according to one of claims 1 to 5, **characterized in that** a control device (100) is provided which fixes a position of a container (5) in the container receiving spaces (2) as a function of a turnover frequency of the container (5).

7. Stacking storage arrangement according to claim 6, **characterized in that** the control device (100) fixes the position of a container (5) with a high turnover frequency in a lower region of a container receiving space (2).

8. Stacking storage arrangement according to claim 6 or 7, **characterized in that** the control means (100) determines the position of a container (5) with a high turnover frequency in a column (4) which is closer to the stopping position (15) than the position of a container (5) with a low turnover frequency.

9. Stacking storage arrangement according to one of claims 6 to 8, **characterized in that** the control device (100) actuates the transfer element (18) as a function of the turnover frequency of the container (5) and assigns the container (5) to a row (3) as a function of the turnover frequency.

10. Method for operating a stacking storage arrangement (1) according to one of claims 6 to 9, wherein containers (5) are introduced from below into the container receiving spaces (2) with the aid of the loading vehicles (8) and containers (5) are removed from below from the container receiving spaces (2) with the aid of the loading vehicles (8), wherein each row (3) of container receiving spaces (2) is assigned a vehicle stopping position (15) in the extension of the row (3), in which an item (5) can be provided for storage or after retrieval.

11. Method according to claim 11, **characterized in that** containers (5) are moved from one area to another outside the rows (3).

12. Method according to claim 11 or 12, **characterized in that** containers (5) with a high inventory turnover rate are arranged in a lower region of the container receiving spaces (2).

13. Method according to one of claims 10 to 12, **characterized in that** containers (5) with a high turnover frequency are arranged closer to the area (15) in the extension of the rows (3) than containers with a low turnover frequency.

14. Method according to one of claims 10 to 13, **characterized in that** the turnover rate of containers is determined dynamically during operation.

## Revendications

1. Système d'entreposage par empilement (1) avec des véhicules de chargement (8) et plusieurs espaces de logement de conteneurs (2), qui sont disposés dans plusieurs rangées (3) et piles (4) et dans lesquels des conteneurs (5) peuvent être disposés les uns sur les autres sous la forme de piles (6), sachant que les conteneurs (5) peuvent être mis en place depuis le bas dans les espaces de logement de conteneurs (2) à l'aide de véhicules de chargement (8)et les conteneurs (5) peuvent être enlevés des espaces de logement de conteneurs (2) en bas à l'aide des véhicules de chargement (8), sachant qu'un espace de chargement (7) est disposé en dessous des espaces de logement de conteneurs (2) dans lequel les véhicules de chargement (8) peuvent être déplacés et le système d'entreposage par empilement (1) comporte plusieurs positions de maintien de véhicule de chargement (15) et plusieurs agencements d'entreposage/déstockage (21), sachant que les positions de maintien de véhicule de chargement (15) sont disposées en dehors des espaces de logement de conteneurs (2), sachant que chaque agencement d'entreposage/déstockage (21), comporte au moins une position de transfert de conteneur pour transborder un conteneur (5) de l'agencement d'entreposage/déstockage (21) au véhicule de chargement (8) ou vice versa, **caractérisé en ce qu'**une position de maintien de véhicule de chargement (15) propre est attribuée à chaque rangée (3) et un agencement d'entreposage/déstockage (21) est attribué à chaque position de maintien de véhicule de chargement (15).

2. Système d'entreposage par empilement selon la revendication 1, **caractérisé en ce que** la position de transfert de conteneurs comporte un élément de dépose (22) sous lequel est disposé une surface d'entrée (23) pour le véhicule de chargement (8).

3. Système d'entreposage par empilement selon la revendication 1 ou 2, **caractérisé en ce qu'**un élément de transfert (18) commun est affecté à plusieurs agencements d'entreposage/déstockage (21).

4. Système d'entreposage par empilement selon l'une quelconque des revendication 1 à 3, **caractérisé en ce qu'**au moins un agencement d'entreposage/déstockage (21) comporte une position d'entreposage (24) et une position de déstockage (25).

5. Système d'entreposage par empilement selon la revendication 4, **caractérisé en ce que** la position d'entreposage (24) et la position de déstockage (25) sont disposées l'une derrière l'autre en prolongation de la rangée (3).

6. Système d'entreposage par empilement selon l'une quelconque des revendications 1 à 5, **caractérisé en ce qu'**un dispositif de commande (100) est prévu, qui établit une position d'un conteneur (5) dans les espaces de logement de conteneurs (2) en fonction d'une fréquence de transbordement du conteneur (5).

7. Système d'entreposage par empilement selon la revendication 6, **caractérisé en ce que** le dispositif de commande (100) établit la position d'un conteneur (5) avec une fréquence de transbordement élevée dans une zone inférieure d'un espace de logement de conteneurs (2).

8. Système d'entreposage par empilement selon la revendication 6 ou 7, **caractérisé en ce que** le dispositif de commande (100) établit la position d'un conteneur (5) avec une fréquence de transbordement élevée dans une pile (4), qui se situe plus près sur la position de maintien (15) que la position d'un conteneur (5) avec une faible fréquence de transbordement.

9. Système d'entreposage par empilement selon l'une quelconque des revendications 6 à 8, **caractérisé en ce que** le dispositif de commande (100) active l'élément de transfert (18) en fonction de la fréquence de transbordement du conteneur (5) et affecte au conteneur (5) une rangée (3) dépendant de la fréquence de transbordement.

10. Procédé de fonctionnement d'un système d'entreposage par empilement (1) selon l'une quelconque des revendications 1-9, sachant que l'on met en place les conteneurs (5) à l'aide des véhicules de chargement (8) depuis le bas dans les espaces de logement de conteneurs (2) et l'on enlève les conteneurs (5) à l'aide des véhicules de chargement (8) par le bas des espaces de logement de conteneurs (2), sachant que l'on affecte à chaque rangée (3) d'espaces de logement de conteneurs (2) une position de maintien de véhicule de chargement (15) en prolongation de la rangée (3), dans laquelle on peut disposer d'un conteneur (5) pour mise en entreposage ou après le déstockage.

11. Procédé selon la revendication 10, **caractérisé en ce que** l'on déplace les conteneurs (5) en dehors des rangées (3) d'une zone dans une autre zone.

12. Procédé selon l'une quelconque des revendications 10 ou 11, **caractérisé en ce que** l'on dispose les conteneurs (5) avec une fréquence de transbordement élevée dans une zone inférieure des espaces de logement de conteneurs (2).

13. Procédé selon l'une quelconque des revendications 10 à 12, **caractérisé en ce que** l'on dispose les conteneurs (5) avec une fréquence de transbordement élevée plus près sur la zone (15) en prolongation des rangées (3) que les conteneurs avec une faible fréquence de transbordement.

14. Procédé selon l'une quelconque des revendications 10 à 13, **caractérisé en ce que** l'on détermine de façon dynamique en fonctionnement une fréquence de transbordement des conteneurs.
